# FASCICULE DE BREVET EUROPEEN

(11) **EP 4 363 319 B1**
(45) Date de publication et mention de la délivrance du brevet: **06.08.2025**
(21) Numéro de dépôt: 22744288.6
(22) Date de dépôt: 27.06.2022
(51) Int. Cl.: B64D 29/06

(54) **SYSTÈME DE VERROUILLAGE POUR NACELLE D'AÉRONEF**
VERRIEGELUNGSSYSTEM FÜR EINE FLUGZEUGGONDEL
LOCKING SYSTEM FOR AN AIRCRAFT NACELLE

(30) Priorité: 02.07.2021 FR 2107211
(43) Date de publication de la demande: 08.05.2024
(73) Titulaire: Safran Nacelles, 76700 Gonfreville-l'Orcher (FR)
(72) Inventeur: JORET, Jean-Philippe, 77550 MOISSY-CRAMAYEL (FR); DUTOT, Vincent, 77550 MOISSY-CRAMAYEL (FR); RIQUIER, Stéphane, 77550 MOISSY-CRAMAYEL (FR); BELLET, François, 77550 MOISSY-CRAMAYEL (FR); LAMPAERT, Charles-Antoine, 77550 MOISSY-CRAMAYEL (FR)
(74) Mandataire: Gevers & Orès
(86) Numéro de dépôt international: PCT/FR2022/051271
(87) Numéro de publication internationale: WO 2023/275474

(56) Documents cités:
- EP-A2- 2 042 429
- EP-A2- 2 420 447
- FR-A1- 2 926 537
- FR-A1- 3 007 390
- FR-A1- 3 013 682
- US-A1- 2004 012 212

## Description

### Domaine technique de l'invention

L'invention est relative au domaine des nacelles d'aéronef et se rapporte, en particulier, à un système de verrouillage pour une telle nacelle.

### Arrière-plan technique

L'état de la technique comprend notamment les documents EP-A2-2420447, EP-A2-2042429, FR-A1-2926537, US-A1-20040012212, FR-A1-301368 2 et FR-A1-3007390.

Les figures 1 à 9 illustrent un exemple d'utilisation d'un système de verrouillage pour nacelle d'aéronef selon l'état de la technique.

En particulier, les figures 1a, 1b et 2 représentent une nacelle 101 ainsi qu'un mât 103 qui la relie à une aile d'aéronef (non représentée) et les figures 3 à 9 représentent plus particulièrement un système de verrouillage 105 pour une telle nacelle.

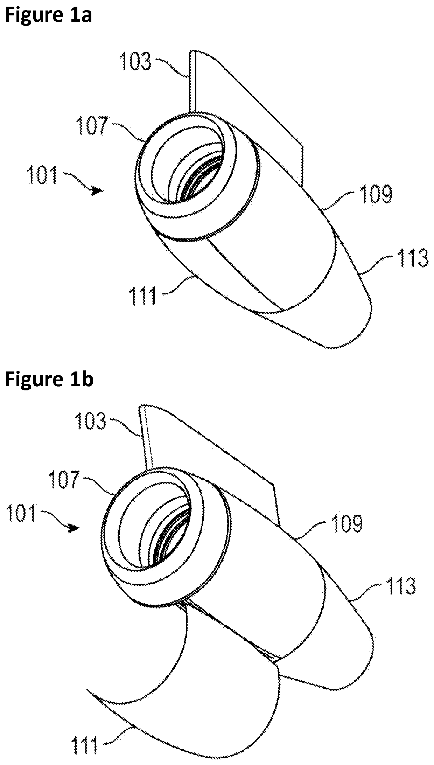

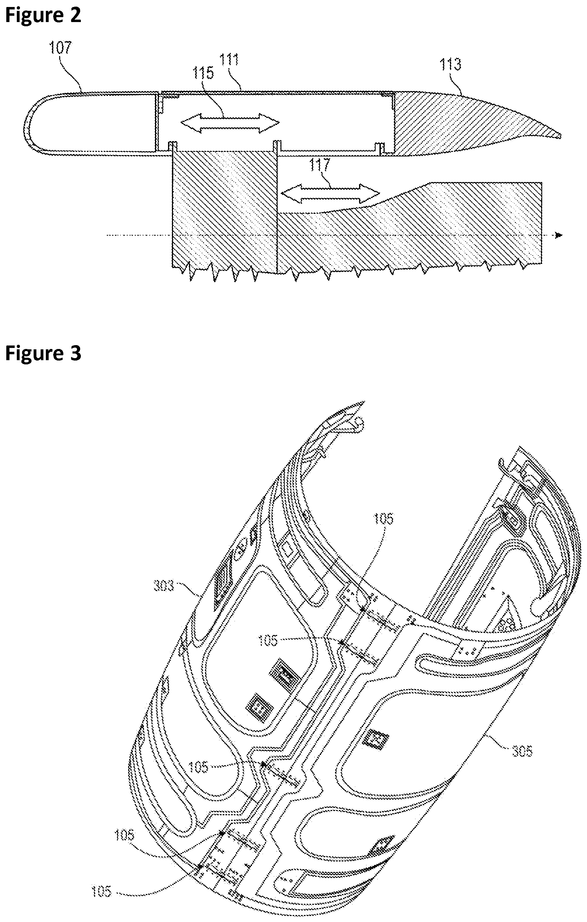

Dans l'exemple représenté sur les figures 1a, 1b et 2, la nacelle 101 comporte une entrée d'air 107, un capot droit 109, un capot gauche 111 et un inverseur de poussée 113. Comme l'illustrent plus spécifiquement la figure 1a et la figure 1b, le capot droit 109 et le capot gauche 111 sont articulés par une charnière (non représentée) qui permet leur ouverture et, par conséquent, l'accès à des équipements qui sont situés soit dans la zone dite « fan » 115 soit dans la zone dite « core » 117. Un tel accès est notamment utile pour effectuer la maintenance ce pièces situées dans ces zones.

Le fait que les capots d'une telle nacelle puissent être ouvert implique l'utilisation d'un ou de plusieurs systèmes de verrouillage pour garantir le maintien en position fermée de ces capots en situation de vol.

En référence aux figures 3 à 9, nous allons maintenant décrire un système de verrouillage selon l'état de la technique.

Dans l'exemple représenté, cinq systèmes de verrouillage 105 sont utilisés pour permettre le passage d'une position ouverte à une position fermée d'un ensemble constitué par deux capots 303 et 305 d'une nacelle d'aéronef.

Le système de verrouillage 105 comprend une première partie 307 montée sur le premier capot 303 et une seconde partie 309 montée sur le second capot 305.

La première partie 307 comporte notamment un crochet 311, un logement de crochet 313, une poignée 315, un orifice 317 et une première pièce tampon 319 (également appelée pad). La seconde partie 309 comporte notamment une gâche 321, un logement de gâche 323, un ergot 325 (également appelé spigot), une seconde pièce tampon 327 et des cales de réglage 329.

L'actionnement de la poignée 315 permet de faire passer le système de verrouillage 105 d'une première position dite ouverte à une seconde position dite fermée et réciproquement. En particulier, en position fermée, le crochet 311 est enclenché dans la gâche 321 de sorte qu'il exerce une traction sur celle-ci.

En outre, dans la mesure où la première partie 307, qui comporte le crochet 311, est montée de manière solidaire sur le capot 303 et la seconde partie 309, qui comporte la gâche 323, est montée de manière solidaire sur le capot 305, lorsque le crochet 311 exerce une traction sur la gâche 321 il maintient le capot 303 et le capot 305 ensemble. Dit autrement, lorsque le système de verrouillage 105 est en position fermée, l'ensemble constitué des capots 303 et 305, représenté à la figure 3, est fermé.

L'orifice 317 et l'ergot 325 ont des formes complémentaires adaptées pour que l'ergot 325 puisse s'insérer dans l'orifice 317 lors du basculement du système de verrouillage 105 en position fermée. En outre, grâce à l'insertion de l'ergot 325 dans l'orifice 317, le crochet 311 est aligné avec la gâche 321 pour pouvoir s'enclencher le cas échéant dans ladite gâche 321.

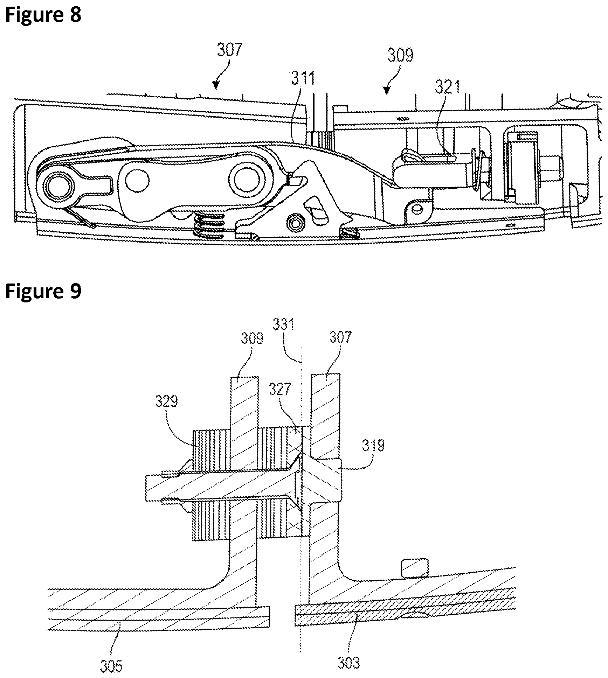

Les pièces tampons 319 et 327 sont positionnées sur des surfaces en vis-à-vis de la première partie 307 et de la seconde partie 309 du système de verrouillage 301 de manière à être mises en appui l'une sur l'autre, au niveau d'un plan de contact 331 entre les deux parties visible à la figure 9. En outre, des cales de réglage 329, accolées à la pièce tampon 327 et à l'ergot 325, permettent d'ajuster la position précise de ce plan de contact 331 pour chaque système de verrouillage 105.

Dans un exemple tel que celui décrit plus haut, la charnière est classiquement située en haut de la nacelle et les systèmes de verrouillage en bas. De ce fait, les systèmes de verrouillage sont difficilement visibles lorsque les capots sont fermés car ils sont situés dans une zone de la nacelle qui est proche du sol.

Le risque est alors que certains systèmes de verrouillage soient laissés en position ouverte par un opérateur sans que cela puisse être observé au sol et, par conséquent, que les capots s'ouvrent en vol.

Pour remédier à ce problème, il est connu d'utiliser des systèmes de verrouillage surdimensionnés, c'est-à-dire des systèmes de verrouillage qui exercent individuellement une force de traction plus élevée que celle strictement nécessaire à la fermeture des capots mais qui permet de palier la défaillance éventuelle d'un autre système de verrouillage de l'ensemble de systèmes de verrouillage utilisés.

Il est également connu, d'utiliser des capteurs inductifs, implantés dans le système de verrouillage, pour détecter le fait qu'un crochet dudit système de verrouillage est effectivement engagé dans une gâche ou non.

Il est encore connu, d'intégrer un capteur d'effort à une vis qui permet la rotation d'un crochet du système de verrouillage. Ainsi, lorsque le crochet est fermé, la vis subit un effort (une déformation) qui est mesuré et qui permet de déterminer si le système de verrouillage est en position ouverte ou fermée.

Dans tous les cas, les solutions utilisées dans l'état de la technique impliquent l'ajout de composants ayant une masse et/ou un coût important du fait de leur complexité ainsi que présentant une difficulté d'intégration aux systèmes de verrouillage existants.

### Résumé de l'invention

La présente invention propose un système de verrouillage destiné à répondre aux inconvénients précités.

À cet effet, selon un premier aspect, l'invention concerne un système de verrouillage selon la revendication 1.

Le système selon l'invention peut comprendre une ou plusieurs des caractéristiques suivantes, prises isolément les unes des autres ou en combinaison les unes avec les autres :
- la première partie comporte un crochet et un logement de crochet et la seconde partie comporte une gâche et un logement de gâche, ledit système de verrouillage étant configuré pour que, lorsqu'il est en position fermée, ledit crochet exerce une traction sur la gâche de sorte que la première partie et la seconde partie sont maintenues ensemble.
- le capteur de charge est positionné entre la pièce tampon et le logement de crochet et, lorsque ledit système de verrouillage est en position fermée, ledit capteur de charge est comprimé entre ladite pièce tampon et ledit logement de crochet.
- le système de verrouillage comprend en outre des moyens de génération configurés pour générer un signal représentatif de la fermeture du système de verrouillage, lorsque le capteur de charge mesure une charge supérieure à une valeur seuil déterminée.
- le système de charge est configuré en outre pour que, lorsque ledit système de verrouillage est en position ouverte, aucune charge ne s'exerce sur le capteur de charge.
- lorsque ledit système de verrouillage est en position ouverte, le capteur de charge est maintenu par la pièce tampon, ladite pièce tampon étant liée à l'autre élément du système de verrouillage, de préférence par une liaison de type pivot-glissant, avec un jeu de fixation adapté pour permettre son coulissement dans ledit autre élément.
- le système de verrouillage est configuré en outre pour que, lorsque ledit système de verrouillage est en position ouverte, une charge inférieure à la valeur seuil déterminée s'exerce sur le capteur de charge.
- lorsque ledit système de verrouillage est en position ouverte, le capteur de charge est maintenu en position par la pièce tampon, ladite pièce tampon étant serrée sur l'autre élément, de préférence par un écrou, de sorte que ledit capteur de charge est comprimé entre ladite pièce tampon et ledit autre élément.

L'invention concerne également, selon un second aspect, une nacelle d'aéronef comprenant une première pièce, une seconde pièce, et un système de verrouillage selon le premier aspect, la première partie du système de verrouillage étant montée sur la première pièce, la seconde partie du système de verrouillage étant montée sur la seconde pièce de sorte que lorsque ledit système de verrouillage est en position fermée, la première pièce et la seconde pièce sont maintenues ensemble.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1a] la figure 1a est une vue en perspective d'une nacelle selon un mode de réalisation de l'état de la technique ;
[Fig. 1b] la figure 1b est une vue en perspective d'une nacelle selon un mode de réalisation de l'état de la technique ;
[Fig. 2] la figure 2 est une vue en coupe d'une partie d'une nacelle selon un mode de réalisation de l'état de la technique ;
[Fig. 3] la figure 3 est une vue en perspective d'un ensemble de capots d'une nacelle selon un mode de réalisation de l'état de la technique ;

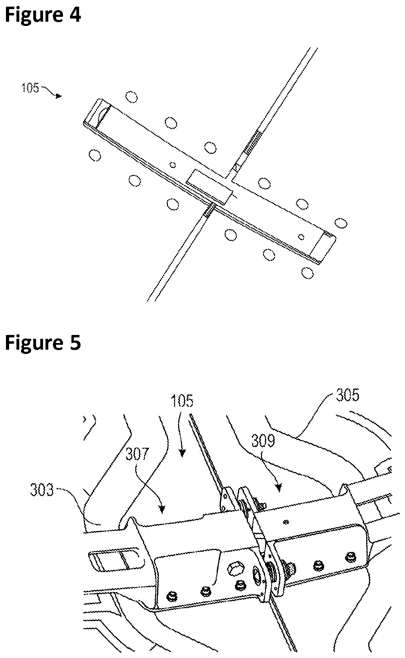

[Fig. 4] la figure 4 est une vue en perspective d'un système de verrouillage selon un mode de réalisation de l'état de la technique ;
[Fig. 5] la figure 5 est une vue en perspective d'un système de verrouillage selon un mode de réalisation de l'état de la technique ;

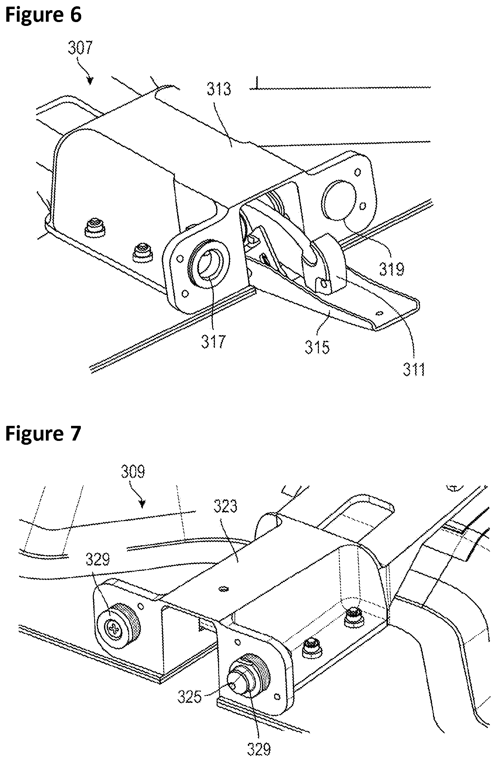

[Fig. 6] la figure 6 est une vue en perspective d'une première partie d'un système de verrouillage selon un mode de réalisation de l'état de la technique ;
[Fig. 7] la figure 7 est une vue en perspective d'une seconde partie d'un système de verrouillage selon un mode de réalisation de l'état de la technique ;
[Fig. 8] la figure 8 est une vue en coupe d'un système de verrouillage selon un mode de réalisation de l'état de la technique ;
[Fig. 9] la figure 9 est une vue en perspective d'une portion d'un système de verrouillage selon un mode de réalisation de l'état de la technique ;

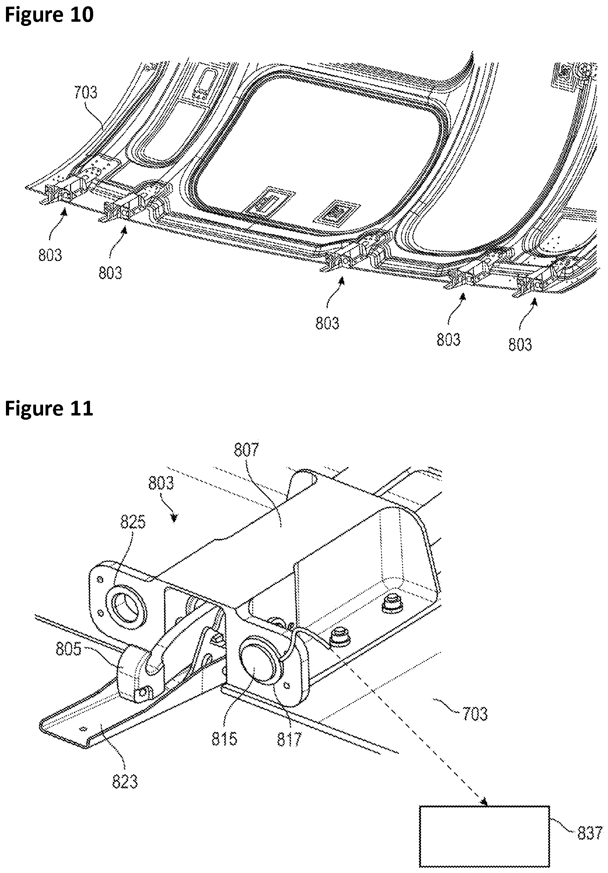

[Fig. 10] la figure 10 est une vue en perspective d'un capot d'une nacelle sur lequel sont montés des premières parties d'un système de verrouillage selon un mode de réalisation de l'invention ;
[Fig. 11] la figure 11 est une vue en perspective d'une première partie d'un système de verrouillage selon un mode de réalisation de l'invention ;

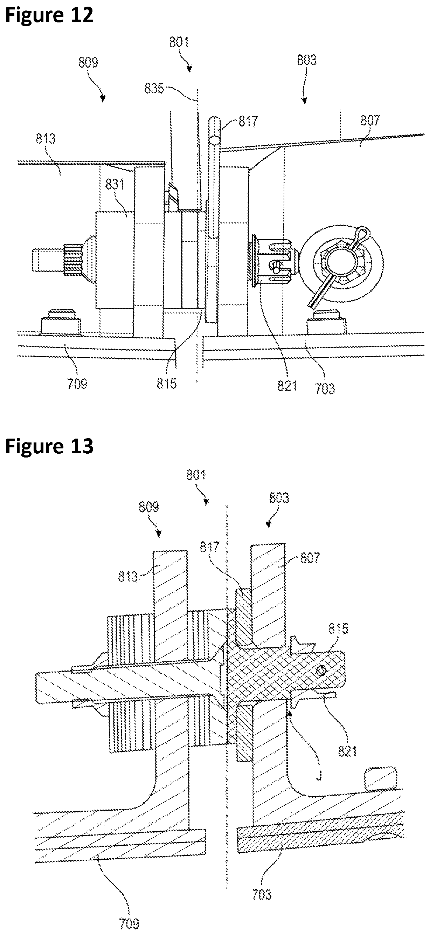

[Fig. 12] la figure 12 est une vue en coupe d'un système de verrouillage selon un mode de réalisation de l'invention ;
[Fig. 13] la figure 13 est une vue en coupe d'un système de verrouillage selon un mode de réalisation de l'invention ;

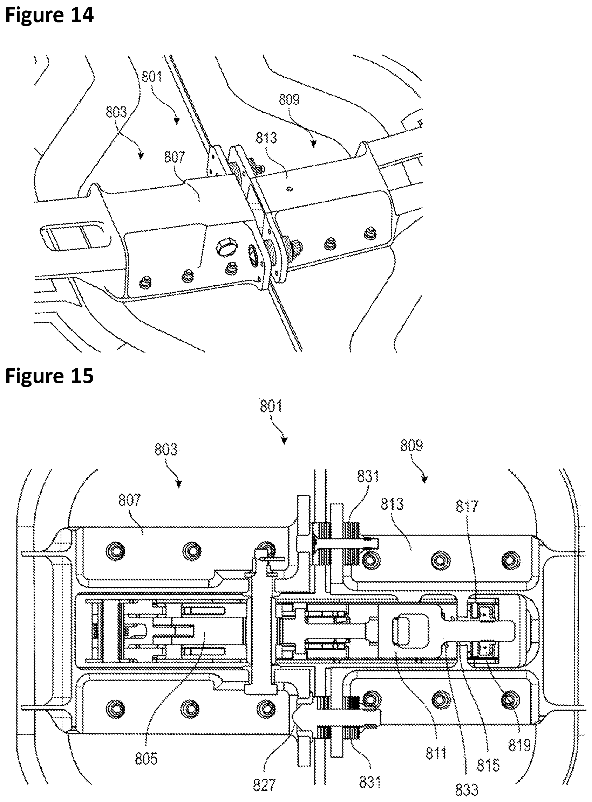

[Fig. 14] la figure 14 est une vue en perspective d'un système de verrouillage selon un autre mode de réalisation de l'invention ; et,
[Fig. 15] la figure 15 est une vue en coupe du dessus d'un système de verrouillage selon un autre mode de réalisation de l'invention.

Les éléments ayant les mêmes fonctions dans les différents modes de réalisation ont les mêmes références dans les figures.

### Description détaillée de l'invention

En référence aux figures 10 à 13, nous allons maintenant décrire un mode de réalisation d'un système de verrouillage selon l'invention.

Le système de verrouillage 801 pour nacelle d'aéronef comprend une première partie 803 qui est montée sur une première pièce 703 d'une nacelle d'aéronef, et une seconde partie 809 qui est montée sur une seconde pièce 709 de la nacelle d'aéronef. Dans l'exemple représenté, la première pièce 703 et la seconde pièce 709 sont deux capots d'un nacelle d'aéronef qui sont articulés par une ligne charnière de manière à pouvoir ouvrir ou fermer l'ensemble constitué de ces deux capots.

De manière générale, selon les différents modes de réalisation de l'invention, les deux parties du système de verrouillage peuvent être destinées à être montées sur diverses pièces d'une nacelle d'aéronef telles que des capots fan, des capots mobiles d'inverseurs de poussée à grille, des capots de demi-inverseurs d'un inverseur de poussée, des portes d'inverseur de poussée ou encore des trappes (telle qu'une trappe d'accès à un verrou ou à un réservoir d'huile par exemple). Dit autrement, l'invention s'applique à un ensemble qui comprend des parties articulées autour d'un axe qui doivent être fermées par un système de verrouillage dont l'actionnement peut être manuel, hydraulique ou électrique.

Le système de verrouillage 801 est configuré pour que, lorsqu'il est en position fermée, la première partie 803 et la seconde partie 809 sont maintenues ensemble. En particulier, dans la mesure où la première partie 803 du système de verrouillage 801 est montée sur une première pièce 703 (en l'espèce un capot) de la nacelle et la seconde partie 809 est montée sur une seconde pièce 709 (en l'espèce un capot également) de la nacelle, le passage du système de verrouillage de la position ouverte à la position fermée entraîne la mise en contact des deux parties du système de verrouillage 801 et le rapprochement des pièces de la nacelle au niveau dudit système de verrouillage 801.

Plus précisément, dans l'exemple représenté, la première partie 803 comporte un crochet 805 et un logement de crochet 807 et la seconde partie 809 comporte une gâche 811 et un logement de gâche 813. Ainsi, le système de verrouillage 801 est configuré pour que, lorsqu'il est en position fermée, le crochet 805 exerce une traction sur la gâche 811 de sorte que la première partie 803 et la seconde partie 809 sont maintenues ensemble. Dit autrement, le crochet 805 s'enclenche sur la gâche 811 et exerce une force qui maintient les deux parties 803 et 809 ensemble.

L'homme du métier appréciera que, dans d'autres modes de réalisation, les éléments de la première et de la seconde partie du système de verrouillage qui permettent le maintien ensemble des deux parties peuvent être différents.

En outre, dans les différentes modes de réalisation, il est possible d'utiliser différents moyen pour basculer d'une position ouverte à une position fermée. Comme, par exemple, un vérin dont les deux parties extrémales sont montées sur les deux pièces de la nacelle d'aéronef pour ouvrir ou fermer ladite nacelle. Les deux pièces en question peuvent alors être mises en contact ou non sous l'action du vérin. De plus, dans un mode de réalisation particulier, ledit vérin peut intégrer un système de verrouillage tel que celui de l'invention.

La première partie 803 comporte également une poignée 823, un orifice 825, une première pièce tampon 815 et un écrou 821 de fixation la pièce tampon 815 alors que la seconde partie 809 comporte également un ergot 827, des cales de réglage 831, des moyens 819 de fixation (en l'espèce un écrou) de la gâche 811 et des moyens de rappel 833 (en l'espèce un ressort).

De manière classique, l'actionnement de la poignée 823 permet de faire passer le système de verrouillage 801 de la position ouverte à la position fermée et réciproquement, l'orifice 825 et l'ergot 827 ont des formes complémentaires adaptées pour que l'ergot 827 s'insère dans l'orifice 825 lorsque le système de verrouillage 801 est en position fermée et les cales de réglage 831 permettent d'ajuster la position du plan de contact 835 entre les deux parties du système de verrouillage 801 lorsqu'il est en position fermée.

Le système de verrouillage comprend enfin un capteur de charge 817 (i.e. un capteur qui mesure un effort, une contrainte) qui est accolé à la première pièce tampon 815 et positionné de manière à être comprimé entre cette pièce tampon 815 et le logement de crochet 807 lorsque le système de verrouillage 801 est en position fermée. Le capteur de charge peut être, par exemple, un capteur utilisant l'effet piézo-électrique pour mesurer la charge qui s'exerce sur lui.

Avantageusement, un tel capteur peut être à la fois économique, facile à intégrer et présenter une masse faible.

Dans l'exemple représenté, la pièce tampon 815 est positionnée sur une surface de la partie 803 du système de verrouillage 801 en vis-à-vis d'une surface de l'autre partie 809 du système de verrouillage 801 de manière à être mise en appui sur ladite autre partie 809 lorsque le système de verrouillage 801 est en position fermée. En outre, la pièce tampon 815 présente une extrémité en forme de disque mise en contact avec l'autre partie du système de verrouillage lorsqu'il est en position fermée. Cette extrémité est prolongée par une portion cylindrique sur laquelle est inséré le capteur de charge 817 en forme d'anneau. Celui-ci est donc situé autour de cette portion cylindrique de la pièce tampon 815, entre l'extrémité en forme de disque de cette même pièce tampon 815 et une surface plane du logement de crochet 807.

Ainsi, lorsque le crochet 805 exerce une traction sur la gâche 811, le capteur de charge 817 est comprimé entre ces deux pièces et mesure alors une charge donnée à partir de laquelle il est possible d'identifier la fermeture du système de verrouillage 801.

En outre, dans l'hypothèse de la survenue d'une panne d'un tel capteur de charge, il est possible d'utiliser en complément un autre moyen de détection de la fermeture ou d'utiliser un capteur dit à trois niveaux de détection, c'est-à-dire un capteur détectant trois niveaux de charge différent à partir desquels il est possible d'identifier l'ouverture, la fermeture et la défaillance d'un système de verrouillage. En outre, dans un mode de réalisation non représenté, il est également possible de superposer trois capteurs, au niveau d'une pièce tampon unique, et avec le même niveau de détection, de manière à pouvoir extraire plusieurs informations de chaque mesure et, identifier, le cas échéant, une panne.

Le système de verrouillage 801 peut également comprendre des moyens 837 (schématiquement représentés à la figure 11) qui génèrent un signal représentatif de la fermeture du système de verrouillage 801, lorsque le capteur de charge 817 mesure une charge supérieure à une valeur seuil déterminée. Ces moyens peuvent être intégrés au capteur de charge 817, comme dans le cas de l'exemple représenté, ou externes à ce dernier. Le signal utilisé pour indiquer que le système de verrouillage est fermé peut être, par exemple, un signal électrique, un signal sonore ou un signal lumineux.

Ainsi, le dépassement d'une valeur seuil - que l'homme du métier saura adapter à une utilisation particulière - entraîne la présentation d'une information sur cette fermeture qui est lisible par un opérateur. Par exemple, un signal lumineux apparaissant dans la cabine du pilote.

En outre, la valeur seuil peut être adaptée pour que, si la seconde partie 809 du système de verrouillage 801 est en appui sur la première partie 803 sans que le système de verrouillage 801 ne soit en position fermée, la charge mesurée par le capteur de charge 817 reste inférieure à cette valeur seuil.

Dans un mode de réalisation particulier, le système de verrouillage peut être configuré pour que, lorsqu'il est en position ouverte, aucune charge ne s'exerce sur le capteur de charge. En d'autres termes, le capteur de charge n'est pas comprimé lorsque le système de verrouillage est ouvert.

Dans l'exemple représenté à la figure 13, le capteur de charge 817 est maintenu par la pièce tampon 815 lorsque le système de verrouillage est en position ouverte. En outre, la pièce tampon 815 est liée aux logement de crochet 803 par une liaison de type pivot-glissant avec un jeu J de fixation qui est adapté pour permettre le coulissement de la pièce tampon 815 dans le logement de crochet 807. Ainsi, lorsque la seconde partie 809 du système de verrouillage 801 n'est pas en appui sur la première partie 803, aucune charge ne s'exerce sur le capteur de charge 817.

Alternativement, le système de verrouillage peut être configuré pour que, lorsqu'il est en position ouverte, une charge inférieure à la valeur seuil déterminée (i.e. inférieur à la valeur qui entraîne l'identification de la fermeture du système de verrouillage) s'exerce sur le capteur de charge 817.

Ainsi, dans une configuration similaire à celle représentée à la figure 13, l'écrou 821 est serré de sorte qu'il n'existe pas de jeu J. Dit autrement, le capteur de charge 817 est maintenu en position par la pièce tampon 815 et la pièce tampon 815 est serrée par l'écrou 821 sur le logement de crochet 807 de sorte que le capteur de charge 817 est comprimé entre la pièce tampon 815 et le logement de crochet 807 y compris lorsque le système de verrouillage 801 est en position ouverte.

En outre, dans ce mode de réalisation, la charge qui s'exerce sur le capteur de charge 817 du fait du serrage de la pièce tampon 815 par l'écrou 821 est inférieure à celle qui découle du passage du système de verrouillage 801 en position fermée. Ainsi, la position fermée du système de verrouillage 801 n'est détectée que lorsque le système de verrouillage 801 est effectivement fermé.

La figure 14 et la figure 15 représentent un système de verrouillage dans lequel le capteur de charge 817 est positionné entre la pièce tampon 815 et un moyen 819 de fixation (dans le cas particulier décrit, un écrou) de la gâche 811. Dans ce mode de réalisation, lorsque le système de verrouillage 801 est en position fermée, le capteur de charge 817 est comprimé entre la pièce tampon 815 et l'écrou 819 de fixation de la gâche 811.

En outre, dans le système, tel qu'il est visible à la figure 15, les moyens de rappel 833 de la gâche 811, situés au niveau du capteur de la gâche, entrainent une compression du capteur de charge 817 même lorsque le système de verrouillage est en position ouverte. Toutefois, comme dans le cas du système décrit plus haut, la valeur seuil de charge utilisée pour identifier la fermeture du système de verrouillage est supérieure à celle mesurée lorsque le système de verrouillage est en position ouverte pour ne pas entraîner de fausse détection d'une fermeture du système de verrouillage 801. L'homme du métier appréciera ainsi, qu'avantageusement, quel que soit le positionnement précis du capteur de charge, celui-ci peut être facilement intégré à un système de verrouillage existant et minimiser la masse introduite par l'ajout de moyens permettant la détection de la fermeture.

Finalement, la mesure de la charge par un capteur de charge situé sur l'une ou l'autre des parties du système de verrouillage permet d'identifier facilement la fermeture dudit système de verrouillage.

## Revendications

1. Système de verrouillage (801) pour nacelle d'aéronef comprenant une première partie (803), destinée à être montée sur une première pièce (703) d'une nacelle d'aéronef, et une seconde partie (809), destinée à être montée sur une seconde pièce (709) de la nacelle d'aéronef, ledit système de verrouillage (801) étant configuré pour que, lorsqu'il est dans une position fermée, ladite première partie (803) et ladite seconde partie (809) sont maintenues ensemble,
ledit système de verrouillage (801) étant **caractérisé en ce qu'**il comprend en outre au moins une pièce tampon (815), positionnée sur une surface de l'une desdites première et deuxième parties (803, 809) du système de verrouillage (801) en vis-à-vis d'une surface de l'autre desdites première et deuxième parties (803, 809) du système de verrouillage (801) de manière à être mise en appui sur ladite autre partie (803, 809) lorsque ledit système de verrouillage (801) est en position fermée, et un capteur de charge (817), accolé à ladite pièce tampon (815), et **en ce que**, lorsque ledit système de verrouillage (801) est en position fermée, ledit capteur de charge (817) est comprimé entre ladite pièce tampon (815) et un autre élément (807, 819) dudit système de verrouillage (801).

2. Système de verrouillage (801) selon la revendication 1, dans lequel la première partie (803) comporte un crochet (805) et un logement de crochet (807) et la seconde partie (809) comporte une gâche (811) et un logement de gâche (813), ledit système de verrouillage (801) étant configuré pour que, lorsqu'il est en position fermée, ledit crochet (805) exerce une traction sur la gâche (811) de sorte que la première partie (803) et la seconde partie (809) sont maintenues ensemble.

3. Système de verrouillage (801) selon la revendication 2, dans lequel le capteur de charge (817) est positionné entre la pièce tampon (815) et le logement de crochet (807) et dans lequel, lorsque ledit système de verrouillage (801) est en position fermée, ledit capteur de charge (817) est comprimé entre ladite pièce tampon (815) et ledit logement de crochet (807).

4. Système de verrouillage (801) selon l'une quelconque des revendications 1 à 3, comprenant en outre des moyens de génération (837) configurés pour générer un signal représentatif de la fermeture du système de verrouillage (801), lorsque le capteur de charge (817) mesure une charge supérieure à une valeur seuil déterminée.

5. Système de verrouillage (801) selon l'une quelconque des revendications 1 à 4, configuré en outre pour que, lorsque ledit système de verrouillage (801) est en position ouverte, aucune charge ne s'exerce sur le capteur de charge (817).

6. Système de verrouillage (801) selon la revendication 5, dans lequel, lorsque ledit système de verrouillage (801) est en position ouverte, le capteur de charge (817) est maintenu par la pièce tampon (815), ladite pièce tampon (815) étant liée à l'autre élément (807) du système de verrouillage (801), de préférence par une liaison de type pivot-glissant, avec un jeu (J) de fixation adapté pour permettre son coulissement dans ledit autre élément (807).

7. Système de verrouillage (801) selon la revendication 4, configuré en outre pour que, lorsque ledit système de verrouillage (801) est en position ouverte, une charge inférieure à la valeur seuil déterminée s'exerce sur le capteur de charge (817).

8. Système de verrouillage (801) selon la revendication 7, dans lequel, lorsque ledit système de verrouillage (801) est en position ouverte, le capteur de charge (817) est maintenu en position par la pièce tampon (815), ladite pièce tampon (815) étant serrée sur l'autre élément (807), de préférence par un écrou, de sorte que ledit capteur de charge (817) est comprimé entre ladite pièce tampon (815) et ledit autre élément (807).

9. Nacelle d'aéronef comprenant une première pièce (703), une seconde pièce (709), et un système de verrouillage (801) selon l'une quelconque des revendications 1 à 8, la première partie (803) du système de verrouillage (801) étant montée sur la première pièce (703), la seconde partie (809) du système de verrouillage (801) étant montée sur la seconde pièce (709) de sorte que lorsque ledit système de verrouillage (801) est en position fermée, la première pièce (703) et la seconde pièce (709) sont maintenues ensemble.

## Patentansprüche

1. Verriegelungssystem (801) für eine Flugzeuggondel, umfassend ein erstes Teil (803), das dazu vorgesehen ist, an einem ersten Werkstück (703) einer Flugzeuggondel angebracht zu werden, und ein zweites Teil (809), das dazu vorgesehen ist, an einem zweiten Werkstück (709) der Flugzeuggondel angebracht zu werden, wobei das Verriegelungssystem (801) dazu konfiguriert ist, dass, wenn es in einer geschlossenen Stellung ist, das erste Teil (803) und das zweite Teil (809) zusammengehalten werden, wobei das Verriegelungssystem (801) **dadurch gekennzeichnet ist, dass** es weiter mindestens ein erstes Pufferwerkstück (815), das auf einer Oberfläche eines des ersten und des zweiten Teils (803, 809) des Verriegelungssystems (801) gegenüber einer Oberfläche des anderen des ersten und des zweiten Teils (803, 809) des Verriegelungssystems (801) positioniert ist, sodass es auf dem anderen Teil (803, 809) aufliegt, wenn das Verriegelungssystem (801) in der geschlossenen Stellung ist, und einen Ladungssensor (817) umfasst, der an das Pufferwerkstück (815) angefügt ist, und dadurch, dass, wenn das Verriegelungssystem (801) in der geschlossenen Stellung ist, der Ladungssensor (817) zwischen dem Pufferwerkstück (815) und einem anderen Element (807, 819) des Verriegelungssystems (801) komprimiert wird.

2. Verriegelungssystem (801) nach Anspruch 1, wobei das erste Teil (803) einen Haken (805) und ein Hakengehäuse (807) umfasst und das zweite Teil (809) eine Klammer (811) und ein Klammergehäuse (813) umfasst, wobei das Verriegelungssystem (801) dazu konfiguriert ist, dass, wenn es in der geschlossenen Stellung ist, der Haken (805) eine Zugkraft auf die Klammer (811) ausübt, sodass das erste Teil (803) und das zweite Teil (809) zusammengehalten werden.

3. Verriegelungssystem (801) nach Anspruch 2, wobei der Ladungssensor (817) zwischen dem Pufferwerkstück (815) und dem Hakengehäuse (807) positioniert ist und wobei, wenn das Verriegelungssystem (801) in der geschlossenen Stellung ist, der Ladungssensor (817) zwischen dem Pufferwerkstück (815) und dem Hakengehäuse (807) komprimiert wird.

4. Verriegelungssystem (801) nach einem der Ansprüche 1 bis 3, weiter umfassend Erzeugungsmittel (837), die konfiguriert sind, um ein Signal zu erzeugen, das repräsentativ ist für die Schließung des Verriegelungssystems (801), wenn der Ladungssensor (817) eine Ladung misst, die größer ist als ein bestimmter Schwellenwert.

5. Verriegelungssystem (801) nach einem der Ansprüche 1 bis 4, das weiter dazu konfiguriert ist, dass, wenn das Verriegelungssystem (801) in der offenen Stellung ist, keine Ladung auf den Ladungssensor (817) ausgeübt wird.

6. Verriegelungssystem (801) nach Anspruch 5, wobei, wenn das Verriegelungssystem (801) in der offenen Stellung ist, der Ladungssensor (817) von dem Pufferwerkstück (815) gehalten wird, wobei das Pufferwerkstück (815) mit dem anderen Element (807) des Verriegelungssystems (801) vorzugsweise über eine Verbindung vom gleitenden Gelenktyp verbunden ist, mit einem Befestigungsspiel (J), das dazu angepasst ist, dessen Gleiten im anderen Element (807) zu ermöglichen.

7. Verriegelungssystem (801) nach Anspruch 4, das weiter dazu konfiguriert ist, dass, wenn das Verriegelungssystem (801) in der offenen Stellung ist, eine Ladung kleiner als der bestimmte Schwellenwert auf den Ladungssensor (817) ausgeübt wird.

8. Verriegelungssystem (801) nach Anspruch 7, wobei, wenn das Verriegelungssystem (801) in der offenen Stellung ist, der Ladungssensor (817) von dem Pufferwerkstück (815) in Position gehalten wird, wobei das Pufferwerkstück (815) auf das andere Element (807) vorzugsweise durch eine Schraubenmutter aufgeschraubt ist, sodass der Ladungssensor (817) zwischen dem Pufferwerkstück (815) und dem Hakengehäuse (807) komprimiert wird.

9. Flugzeuggondel, umfassend ein erstes Werkstück (703), ein zweites Werkstück (709) und ein Verriegelungssystem (801) nach einem der Ansprüche 1 bis 8, wobei das erste Teil (803) des Verriegelungssystems (801) am ersten Werkstück (703) angebracht ist, das zweite Teil (809) des Verriegelungssystems (801) am zweiten Werkstück (709) angebracht ist, sodass, wenn das Verriegelungssystem (801) in der geschlossenen Stellung ist, das erste Werkstück (703) und das zweite Werkstück (709) zusammengehalten werden.

## Claims

1. A locking system (801) for an aircraft nacelle comprising a first portion (803), intended to be mounted on a first part (703) of an aircraft nacelle, and a second portion (809), intended to be mounted on a second part (709) of the aircraft nacelle, said locking system (801) being configured so that, when in a closed position, said first portion (803) and said second portion (809) are held together,
said locking system (801) being **characterised in that** it further comprises at least one buffer part (815), positioned on a surface of one of the first and second portions (803, 809) of the locking system (801) opposite a surface of the other of the first and second portions (803, 809) of the locking system (801) so as to be brought to bear on said other portion (803, 809) when said locking system (801) is in the closed position, and a load sensor (817), adjoined to said buffer part (815), and **in that**, when said locking system (801) is in the closed position, said load sensor (817) is compressed between said buffer part (815) and another element (807, 819) of said locking system (801).

2. The locking system (801) according to claim 1, wherein the first portion (803) comprises a hook (805) and a hook housing (807) and the second portion (809) comprises a striker (811) and a striker housing (813), said locking system (801) being configured so that, when in a closed position, said hook (805) exerts a pull on the striker (811) so that the first portion (803) and the second portion (809) are held together.

3. The locking system (801) according to claim 2, wherein the load sensor (817) is positioned between the buffer part (815) and the hook housing (807) and wherein, when said locking system (801) is in the closed position, said load sensor (817) is compressed between said buffer part (815) and said hook housing (807).

4. The locking system (801) according to any one of claims 1 to 3, further comprising generating means (837) configured to generate a signal representative of the closure of the locking system (801), when the load sensor (817) measures a load greater than a determined threshold value.

5. The locking system (801) according to any one of claims 1 to 4, further configured so that, when said locking system (801) is in the open position, no load is exerted on the load sensor (817).

6. The locking system (801) according to claim 5, wherein, when said locking system (801) is in the open position, the load sensor (817) is held by the buffer part (815), said buffer part (815) being connected to the other element (807) of the locking system (801), preferably by a pivot-slide type connection, with an attachment clearance (J) adapted to allow it to slide in said other element (807).

7. The locking system (801) according to claim 4, further configured so that, when said locking system (801) is in the open position, a load below the determined threshold value is exerted on the load sensor (817).

8. The locking system (801) according to claim 7, wherein, when said locking system (801) is in the open position, the load sensor (817) is held in position by the buffer part (815), said buffer part (815) being tightened onto the other element (807), preferably by a nut, so that said load sensor (817) is compressed between said buffer part (815) and said other element (807).

9. An aircraft nacelle comprising a first part (703), a second part (709), and a locking system (801) according to any one of claims 1 to 8, the first portion (803) of the locking system (801) being mounted on the first part (703), the second portion (809) of the locking system (801) being mounted on the second part (709) so that when said locking system (801) is in the closed position, the first part (703) and the second part (709) are held together.
